**Europäisches Patentamt**

**European Patent Office**

**Office européen des brevets**

(19)

(11) Numéro de publication : **0 081 534**
**B1**

## FASCICULE DE BREVET EUROPÉEN

(12)

(45) Date de publication du fascicule du brevet :
**28.11.84**

(21) Numéro de dépôt : **82901846.4**

(22) Date de dépôt : **17.06.82**

(86) Numéro de dépôt international :
**PCT/FR 82/00100**

(87) Numéro de publication internationale :
**WO/8300063 (06.01.83 Gazette 83/01)**

(51) Int. Cl.³ : **F 24 D 11/02**

(54) **PROCEDE ET INSTALLATION DE CHAUFFAGE CENTRAL.**

(30) Priorité : **22.06.81 FR 8112987**

(43) Date de publication de la demande :
**22.06.83 Bulletin 83/25**

(45) Mention de la délivrance du brevet :
**28.11.84 Bulletin 84/48**

(84) Etats contractants désignés :
**AT BE CH DE FR GB LI LU NL SE**

(56) Documents cités :
**DE-A- 2 515 289**
**FR-A- 2 394 026**

(73) Titulaire : **CHEVALIER, Gilbert**
**46, rue du Château**
**F-59283 Raimbeaucourt (FR)**

(72) Inventeur : **CHEVALIER, Gilbert**
**46, rue du Château**
**F-59283 Raimbeaucourt (FR)**

(74) Mandataire : **Ecrepont, Robert Pierre**
**12 Place Simon Vollant**
**F-59800 Lille (FR)**

## Description

L'invention se rapporte à un procédé et à une installation de chauffage central d'un ensemble par ailleurs équipé d'au moins une machine thermodynamique telle une pompe à chaleur ou une machine frigorifique.

Dans ces machines, de manière connue, un fluide frigorigène est, par passage dans un détendeur, amené à une relativement basse pression qui lui permettra de se vaporiser à basse température. Ensuite, il est conduit à un évaporateur dans lequel, jusqu'à évaporation complète, il absorbe de la chaleur.

Les vapeurs de frigorigène ainsi produites sont alors, par un compresseur, portées à une relativement haute pression assurant leur circulation et accessoirement leur réchauffage, après quoi, le gaz comprimé obtenu est amené à un condenseur dans lequel, par condensation, le frigorigène fournit au moins une partie de sa chaleur à un agent refroidisseur.

En se refroidissant, le frigorigène passe de l'état gazeux à l'état liquide avant d'être ramené au détendeur pour recommencer un nouveau cycle.

Il est déjà connu de récupérer, au profit d'une installation de chauffage central, la chaleur ainsi disponible sur le circuit haute pression du frigorigène (brevets FR-A-2 394 026 et DE-A-2 515 289).

Ces réalisations connues comprennent, d'une part, un réservoir d'eau récupérant la chaleur dégagée par la condensation du frigorigène et que l'on stocke dans un réservoir accumulateur auquel sont raccordées les conduites de départ et de retour d'un réseau de radiateurs et, d'autre part, une chaudière auxiliaire assurant à l'eau du réseau de radiateurs, les calories pouvant faire défaut dans l'accumulateur.

Dans l'installation décrite au brevet FR-A-2 394 026, la machine thermodynamique est mise en action dès qu'un aquastat décèle une baisse de température dans le réservoir alors que la chaudière est, quant à elle, mise en route par les thermostats du circuit de radiateurs et par un thermostat général.

Cette chaudière agit comme suit : son circuit de retour prélève une partie de l'eau dans la conduite qui, venant du réservoir accumulateur, se dirige vers les radiateurs alors qu'après l'avoir réchauffée, son circuit de départ y remélange une quantité d'eau équivalente au travers d'une vanne régulatrice.

En se mélangeant à l'eau du circuit passant par le réservoir accumulateur, l'eau chauffée par la chaudière auxiliaire réchauffe cette eau qui alors agit sur le thermostat pour inhiber le dégagement de calories au condenseur de la machine thermodynamique.

De ce fait, en période d'utilisation de la chaudière auxiliaire, c'est-à-dire au moment où les besoins en chauffage sont les plus forts, l'installation ne peut plus récupérer, ni donc accumuler, de chaleur à partir de la machine thermodynamique puisqu'elle est arrêtée.

Il est vrai que même dans le cas où le thermostat maintiendrait la machine thermodynamique en action, réchauffée par la chaudière auxiliaire, l'eau du réservoir échangeur-accumulateur serait alors trop chaude pour parvenir à prélever de la chaleur sur le condenseur de ladite machine puisque dans celle-ci le frigorigène serait pratiquement à une température identique à celle de l'eau ce qui interdirait tout échange.

C'est certainement pourquoi donc, la machine thermodynamique qui est dans ce cas une pompe à chaleur, n'est mise en action que pendant les rares moments où l'eau du réservoir accumulateur n'est pas réchauffée par la chaudière ce qui, toutefois, est un rôle insuffisant pour amortir l'investissement important que représente une pompe à chaleur qui n'aurait pas d'autre usage afin de pouvoir être commandée en fonction des seules nécessités du chauffage.

Par contre, cela interdit l'utilisation d'une machine thermodynamique, qui aurait un autre usage, telle une machine frigorifique qui ne pourrait être arrêtée et mise en marche en fonction des nécessités du chauffage mais au contraire seulement en fonction des besoins de froid et dont pourtant les calories alors dégagées au condenseur sont d'autant plus appréciables que sans cette récupération, elles seraient perdues et qu'à ce titre elles peuvent donc être considérées comme étant gratuites.

Les mêmes inconvénients se retrouvent dans l'installation décrite au brevet DE-A-2 515 289 du fait qu'elle est conçue de manière telle que le chauffage de l'eau du réservoir accumulateur par les calories prélevées au condenseur de la machine thermodynamique, qui est également une pompe à chaleur qui n'a pas d'autre usage, n'est commandé qu'en fonction de critères qui sont étrangers aux impératifs de la machine thermodynamique elle-même qui, quoi qu'il en soit, est arrêtée dès la mise en marche de la chaudière auxiliaire, ce qui s'opère à des moments précis.

Un résultat que l'invention vise à obtenir est un procédé et une installation de chauffage qui remédient à ces inconvénients et donc qui conviennent pour la récupération de la chaleur sur le circuit de condensation d'une machine thermodynamique, telle une pompe à chaleur, mais aussi et surtout sur le circuit de condensation d'une machine frigorifique dont la marche et l'arrêt restent, quant à eux, indépendants de la marche ou de l'arrêt de la chaudière et du chauffage en général.

A cet effet, elle a pour objet un procédé de chauffage notamment caractérisé en ce que, à l'exclusion de toute action sur la machine thermodynamique, pendant la période de chauffage :

— dès que, dans le réservoir échangeur-accumulateur la température du fluide caloporteur atteint un certain seuil, par exemple de quarante degrés, on isole les conduites par lesquelles la chaudière est reliée au circuit alimentant le réseau d'échangeurs et on libère le retour de ce circuit vers le réservoir et inversement,

— dès que, dans le réservoir échangeur-accumulateur, la température du fluide caloporteur descend au-dessous d'un certain seuil, par exemple de quarante degrés, on interdit le retour au réservoir échangeur-accumulateur du circuit alimentant les échangeurs et on met en marche la chaudière auxiliaire dont on raccorde les conduites de départ et de retour audit circuit alimentant les échangeurs.

Elle a également pour objet l'installation de chauffage mettant en œuvre ce procédé.

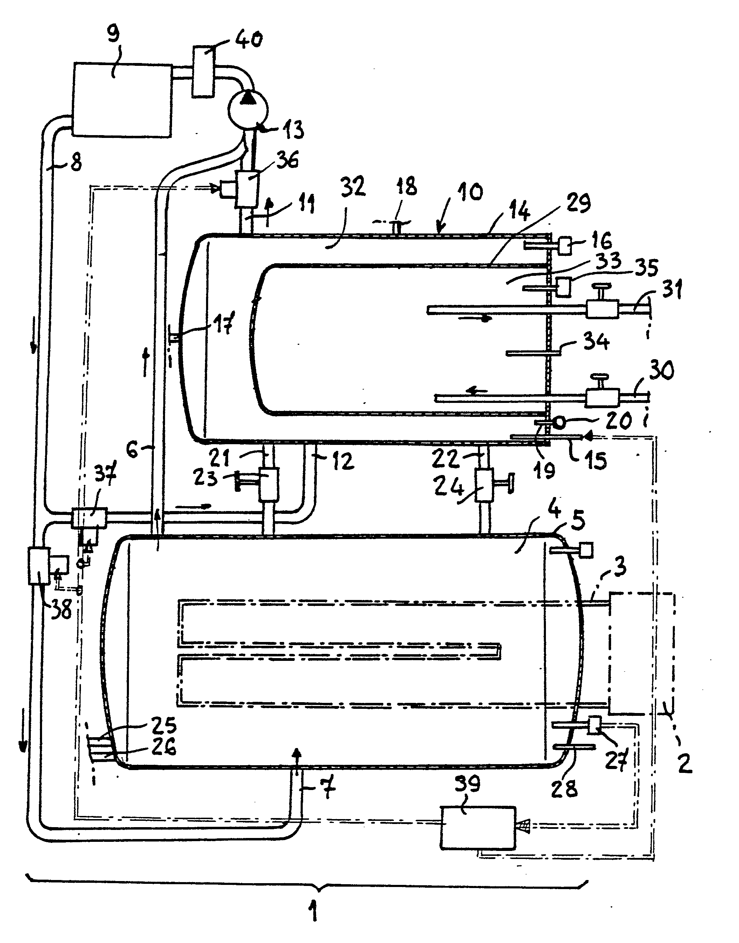

Elle sera bien comprise à l'aide de la description ci-après faite, à titre d'exemple non limitatif, en regard du dessin ci-annexé, qui représente schématiquement une installation conforme à un mode préféré de réalisation de l'invention.

En se reportant au dessin, on voit que l'installation 1 est combinée à au moins une machine thermodynamique 2, telle une machine frigorifique, dont est représenté le circuit 3 dans lequel circule le frigorigène à l'état gazeux dont la condensation dégagera de la chaleur.

Afin de provoquer la condensation, le circuit 3 du frigorigène est refroidi extérieurement par un agent de refroidissement 4 qui, en échange, absorbe la chaleur ainsi dégagée.

De manière connue, l'agent de refroidissement est un fluide caloporteur, tel de l'eau contenue dans un réservoir 5 enveloppant le circuit 3 du frigorigène, afin de récupérer et d'accumuler la chaleur qu'il dégage.

A ce réservoir d'échange et d'accumulation sont raccordées des conduites de départ 6 et de retour 7 d'un circuit 8 alimentant un réseau d'échangeurs 9, tels des radiateurs.

L'installation 1 comprend en outre, de manière connue, une chaudière auxiliaire 10 apte à assurer, au fluide caloporteur traversant les échangeurs 9, la chaleur qui peut faire défaut dans le réservoir d'échange et d'accumulation 5.

A cet effet, ses circuits de départ 11 et de retour 12 sont raccordés au circuit 8 alimentant le réseau d'échangeurs et sur lequel est intercalée une pompe 13 commandant la circulation du fluide caloporteur dans lesdits échangeurs 9.

La chaudière auxiliaire 10 peut être de tout type connu et par exemple consister en une chaudière électrique formée d'un réservoir 14 dans lequel pénètre au moins un élément thermoplongeur 15.

Cette chaudière auxiliaire 10 comprend en outre des organes de contrôle et de sécurité, tels un aquastat 16, un départ 17 vers un vase d'expansion (non représenté), un raccord 18 pour une soupape de sûreté (non représentée) et un raccord 19 pour un manomètre 20.

Selon une caractéristique de l'invention, notamment pour des commodités de remplissage et de vidange et pour d'autres raisons qui seront vues plus loin, le réservoir 14 de la chaudière auxiliaire 10 sera relié au réservoir échangeur-accumulateur 5 par au moins une conduite 21, 22

contrôlée par des vannes 23, 24, de préférence manuelles, et qui, en période de chauffage, sont normalement toujours fermées.

Au réservoir 5 d'échange et d'accumulation sont par ailleurs raccordés des conduites, l'une de remplissage 25 et l'autre de vidange 26 ainsi que des organes de contrôle, tels un aquastat 27.

Ne serait-ce qu'afin de faciliter le dégivrage périodique de l'évaporateur (non représenté), dégivrage pour lequel le cycle de fonctionnement de la machine thermodynamique est généralement inversé, dans le réservoir 5 d'échange et d'accumulation, pourra également être prévue une source de chauffage, telle une électrode 28.

Dans le réservoir de la chaudière auxiliaire 10 peut évidemment également plonger un ballon 29 empli d'eau qui, après chauffage, est destinée à être consommée, notamment dans des installations sanitaires.

A cet effet, ce ballon est relié à une conduite d'alimentation 30 et à une conduite 31 de puisage d'eau chaude.

En plus de la chaleur qui lui est communiquée par l'eau de chauffage 32 dans laquelle plonge le ballon, l'eau chaude sanitaire 33 peut être chauffée par une source d'appoint, telle une électrode 34 mise en service selon les informations reçues par un aquastat 35 plongeant dans le ballon 29.

Selon une caractéristique essentielle de l'invention, à l'exclusion de toute action sur la machine thermodynamique, pendant la période de chauffage :

— dès que, dans le réservoir échangeur-accumulateur 5, la température du fluide caloporteur 4 atteint un certain seuil, par exemple de quarante degrés, on isole les conduites 11, 12 par lesquelles la chaudière auxiliaire 10 est reliée au circuit 8 alimentant le réseau d'échangeurs 9 et on libère le retour de ce circuit vers le réservoir échangeur-accumulateur, et inversement,

— dès que, dans le réservoir échangeur-accumulateur 5, la température du fluide caloporteur descend au-dessous d'un certain seuil, par exemple de quarante degrés, on interdit le retour 7 au réservoir échangeur-accumulateur 5 du circuit 8 alimentant les échangeurs 9 et on met en marche la chaudière auxiliaire 10 dont on raccorde les conduites de départ 11 et de retour 12 audit circuit 8 alimentant les échangeurs 9.

Grâce à ce procédé, dans lequel la machine thermodynamique peut toujours poursuivre son action, priorité est donnée à la récupération de la chaleur dans le réservoir 5.

Dès que son eau est à température suffisante, elle assure la fonction de chauffage sans franchir le réservoir de la chaudière dont le thermoplongeur peut être arrêté dans la limite où son propre aquastat 16 ne décèle pas un refroidissement au-dessous du seuil fixé afin que, lors d'une nouvelle mise en service, l'eau soit immédiatement utilisable.

Quoi qu'il en soit la chaudière étant isolée du circuit des échangeurs, ce maintien en température ne consommera pratiquement pas d'énergie.

Dès que l'eau du réservoir 5 est à température insuffisante, au lieu d'y mélanger de l'eau plus chaude, on l'isole afin que, tout ce qui peut être récupéré sur la machine thermodynamique qui poursuit son propre cycle de fonctionnement, soit conservé et rétablisse ainsi rapidement une température suffisante dans le réservoir.

Selon une autre caractéristique du procédé selon l'invention, en dehors des périodes de chauffage et lorsque seule l'eau chaude sanitaire est nécessaire, on interdit toute circulation de fluide caloporteur dans le circuit 8 qui alimentait les échangeurs et on ouvre les conduites de communications prévues à cet effet entre le réservoir 14 de la chaudière auxiliaire 10 et le réservoir échangeur-accumulateur 5 pour que, par effet de thermosyphon, l'eau du réservoir échangeur-accumulateur circule dans le réservoir 14 de la chaudière 10 pour chauffer le ballon 29 d'eau sanitaire 33.

Afin de permettre la mise en œuvre de ce procédé, selon une caractéristique essentielle de l'invention, d'une part, l'installation comprend à la fois des vannes commandées 36 et 37 contrôlant le raccordement des conduites de départ 11 et de retour 12 de la chaudière auxiliaire 10 sur le circuit 8 alimentant les échangeurs 9 et un organe d'isolation commandé 38, intercalé entre le retour 7 au réservoir échangeur-accumulateur 5 et le circuit 8 alimentant les échangeurs et, d'autre part, dans le réservoir échangeur-accumulateur 5, l'aquastat 27 est relié tant à la commande 15 de la chaudière qu'à celle des vannes commandées 36 et 37 et de l'organe d'isolation 38.

Les vannes commandées 36 et 37 et l'organe d'isolation 38 consisteront par exemple, en des électrovannes pilotées par un circuit de commande 39 comprenant, par exemple, des inverseurs ou des relais ou un microprocesseur recevant les informations de l'aquastat 27.

Dans une variante de réalisation, l'aquastat est également relié à la commande de la pompe 13 et l'installation, notamment sur le circuit 8 alimentant le réseau d'échangeurs, comprend en outre au moins un clapet 40 qui interdit la circulation de l'eau par simple effet de thermosyphon et ce afin de permettre, par la marche ou l'arrêt de la pompe 13, d'être assuré de la circulation ou de l'arrêt du fluide caloporteur.

Dans le cas d'ensemble disposant de plusieurs machines thermodynamiques, il est évident que l'installation de chauffage pourra comprendre plusieurs circuits 3 de fluide frigorigène dans un même réservoir et/ou plusieurs réservoirs échangeurs-accumulateurs 5 montés en série.

**Revendications**

1. Procédé de chauffage central d'un ensemble équipé d'au moins une machine thermodynamique (2) telle une pompe à chaleur ou une machine frigorifique, et d'une installation (1) de chauffage comprenant :
— d'une part, au moins un réservoir échangeur-accumulateur (5) récupérant la chaleur dégagée dans au moins un circuit (3) par la condensation d'un fluide frigorigène, lequel réservoir est, par des conduites de départ (6) et de retour (7) relié à un circuit (8) alimentant un réseau d'échangeurs (9), tels des radiateurs, et,
— d'autre part, une chaudière auxiliaire (10) au réservoir (14) de laquelle sont reliées des conduites de départ (11) et de retour (12) raccordées au circuit (8) alimentant le réseau d'échangeurs (9), ce procédé étant caractérisé en ce que, à l'exclusion de toute action sur la machine thermodynamique, pendant la période de chauffage :
— dès que, dans le réservoir échangeur-accumulateur (5), la température du fluide caloporteur (4) atteint un certain seuil, par exemple de quarante degrés, on isole les conduites (11) par lesquelles la chaudière auxiliaire (10) est reliée au circuit (8) alimentant le réseau d'échangeurs (9) et on libère le retour de ce circuit vers le réservoir échangeur-accumulateur,
et inversement,
— dès que, dans le réservoir échangeur-accumulateur (5), la température du fluide caloporteur descend au-dessous d'un certain seuil, par exemple de quarante degrés, on interdit le retour (7) au réservoir échangeur-accumulateur (5) du circuit (8) alimentant les échangeurs (9) et on met en marche la chaudière auxiliaire (10) dont on raccorde les conduites de départ (11) et de retour (12) audit circuit (8) alimentant les échangeurs (9).

2. Procédé selon la revendication 1 appliqué à une installation comprenant en outre un ballon (29) qui pour le chauffage de l'eau sanitaire (33) plonge dans le réservoir (14) de la chaudière auxiliaire (10), caractérisé en ce que, en dehors des périodes de chauffage et lorsque seule l'eau chaude sanitaire est nécessaire on interdit toute circulation de fluide caloporteur dans le circuit (8) qui alimentait les échangeurs et on établit une communication (21, 22) entre le réservoir (14) de la chaudière auxiliaire (10) et le réservoir échangeur-accumulateur (5) pour que, par effet de thermosyphon, l'eau du réservoir échangeur-accumulateur circule dans le réservoir (14) de la chaudière auxiliaire pour chauffer le ballon (29) d'eau sanitaire (33).

3. Installation pour le chauffage central d'un ensemble équipé d'au moins une machine thermodynamique (2), telle une pompe à chaleur ou une machine frigorifique comprenant :
— d'une part, au moins un réservoir échangeur-accumulateur (5) récupérant la chaleur dégagée dans au moins un circuit (3) par la condensation d'un fluide frigorigène, lequel réservoir est, par des conduites de départ (6) et de retour (7), relié à un circuit (8) alimentant un réseau d'échangeurs (9), tels des radiateurs et,
— d'autre part, une chaudière auxiliaire (10) au réservoir (14) de laquelle sont reliées des conduites de départ (11) et de retour (12) raccordées au circuit (8) alimentant le réseau d'échangeurs (9) et par ailleurs, au moins des moyens (15) de commande de la chaudière et des moyens (27) de contrôle de la température de l'eau dans le réseau échangeur-accumulateur (5),
cette installation étant caractérisée en ce que :

— d'une part, l'installation comprend à la fois des vannes commandées (36 et 37) contrôlant le raccordement des conduites de départ (11) et de retour (12) de la chaudière auxiliaire (10) sur le circuit (8) alimentant les échangeurs (9) et un organe d'isolation (38) commandé, intercalé entre le retour (7) au réservoir échangeur-accumulateur (5) et le circuit (8) alimentant les échangeurs (9),
et en ce que,

— d'autre part, dans le réservoir échangeur-accumulateur (5), l'aquastat (27) est relié tant à la commande (15) de la chaudière qu'à celle des vannes commandées (36 et 37) et de l'organe d'isolation (38).

4. Installation selon la revendication 3, comprenant en outre un ballon (29) qui, pour le chauffage de l'eau sanitaire (33), plonge dans le réservoir (14) de la chaudière auxiliaire, et par ailleurs la pompe (13) contrôlant la circulation du fluide caloporteur dans le circuit (8) alimentant le réseau d'échangeurs (9),
cette installation étant caractérisée en ce que :

— le réservoir (14) de la chaudière auxiliaire (10) est relié au réservoir échangeur-accumulateur (5) par au moins une conduite (21, 22) contrôlée par des vannes (23, 24),
et en ce que :

— d'une part, l'aquastat est également relié à la commande de la pompe (13) et,

— d'autre part, l'installation, notamment sur le circuit (8) alimentant le réseau d'échangeurs, comprend au moins un clapet (40) qui interdit la circulation de l'eau par simple effet de thermosyphon et ce afin de permettre, par la marche où l'arrêt de la pompe (13), d'être assuré de la circulation ou de l'arrêt du fluide caloporteur.

## Claims

1. A central heating method for an assembly provided with at least one thermodynamic machine (2) such as a heat pump or a refrigerating machine, and with a heating installation (1) comprising :

— on the one hand, at least one exchanger-accumulator reservoir (5) recovering the heat released in at least one circuit (3) by the condensation of a refrigerating fluid, which reservoir is connected via outlet (6) and return (7) pipes to a circuit (8) which supplies a network of exchangers (9), such as radiators, and,

— on the other hand, an auxiliary boiler (10) to whose reservoir (14) there are connected outlet (11) and return (12) pipes connected to the circuit (8) supplying the exchanger network (9),
this method being characterized in that, excluding all activity in the thermodynamic machine during the heating period :

— as soon as the temperature of the heat transfer fluid (4) in the exchanger-accumulator reservoir (5) reaches a certain threshold, for example of forty degrees, the pipes (11) via which the auxiliary boiler (10) is connected to the circuit (8) supplying the exchanger network (9) are isolated and the return of this circuit towards the exchanger-accumulator reservoir is freed,
and conversely,

— as soon as the temperature of the heat transfer fluid in the exchanger-accumulator reservoir (5) drops below a certain threshold, for example of forty degrees, the return (7) to the exchanger-accumulator reservoir (5) of the circuit (8) supplying the exchangers (9) is stopped and the auxiliary boiler (10), whose outlet (11) and return (12) pipes are connected to the said circuit (8) supplying the exchangers (9), is actuated.

2. A method as claimed in claim 1 applied to an installation further comprising a tank (29) which, for heating water for domestic use (33), is immersed in the reservoir (14) of the auxiliary boiler (10), characterized in that, outside the heating periods and when only hot water for domestic use is required, all circulation of the heat transfer fluid is stopped in the circuit (8) which supplied the exchangers and communication (21, 22) is set up between the reservoir (14) of the auxiliary boiler (10) and the exchanger-accumulator reservoir (5) so that, as a result of the thermosyphon effect, the water of the exchanger-accumulator reservoir circulates in the reservoir (14) of the auxiliary boiler so as to heat the tank (29) of water for domestic use (33).

3. An installation for centrally heating an assembly provided with at least one thermodynamic machine (2), such as a heat pump or a refrigerating machine comprising :

— on the one hand, at least one exchanger-accumulator reservoir (5) recovering the heat released in at least one circuit (3) by the condensation of a refrigerating fluid, which reservoir is connected via outlet (6) and return (7) pipes, to a circuit (8) supplying a network of exchangers (9), such as radiators, and

— on the other hand, an auxiliary boiler (10) to whose reservoir (14) there are connected outlet (11) and return (12) pipes connected to the circuit (8) supplying the network of exchangers (9) and, in addition, at least some means (15) for controlling the boiler and means (27) for controlling the temperature of the water in the exchanger-accumulator reservoir (5),
this installation being characterized in that,

— on the one hand, the installation comprises both controlled valves (36 and 37) controlling the connection of the outlet (11) and return (12) pipes of the auxiliary boiler (10) on the circuit (8) supplying the exchangers (9) and a controlled isolation member (38) inserted between the return (7) to the exchanger-accumulator reservoir (5) and the circuit (8) supplying the exchangers (9),
and in that

— on the other hand, in the exchanger-accumulator reservoir (5), the aquastat (27) is connected both to the control (15) of the boiler and to

the control of the controlled valves (36 and 37) and of the isolation member (38).

4. An installation as claimed in claim 3, further comprising a tank (29) which, for heating water for domestic use (33), is immersed in the reservoir (14) of the auxiliary boiler, and, in addition, the pump (13) controlling the circulation of the heat transfer fluid in the circuit (8) supplying the network of exchangers (9),
this installation being characterized in that,
— the reservoir (14) of the auxiliary boiler (10) is connected to the exchanger-accumulator reservoir (5) by at least one pipe (21, 22) controlled by valves (23, 24),
and in that
— on the one hand, the aquastat is likewise connected to the control of the pump (13) and,
— on the other hand, the installation, in particular on the circuit (8) supplying the exchanger network, comprises at least one valve (40) which stops the circulation of the water simply by the thermosyphon effect so as to enable it to be ensured that the heat transfer fluid is circulating or has stopped by actuating or stopping the pump (13).

**Ansprüche**

1. Verfahren für die Zentralheizung einer Anlage, die zumindest mit einer thermodynamischen Maschine, beispielsweise einer Wärmepumpe oder einer Kältemaschine, und mit einer Heizungsvorrichtung (1) ausgestattet ist, die zumindest einen Austausch-Sammel-Behälter (5) für die Rückgewinnung der zumindest in einer Leitung (3) durch Kondensation eines Kältemittels freiwerdenden Wärme aufweist, wobei der Behälter durch eine abführende Leitung (6) und eine rückführende Leitung (7) mit einer Versorgungsleitung (8) eines Austauschernetzes (9), wie beispielsweise Heizkörper, verbunden ist, und einen Hilfskessel (10), mit dessen Behälter (14) eine abführende Leitung (11) und rückführende Leitung (12) verbunden sind, die an die Versorgungsleitung (8) des Netzes der Austauscher (9) angeschlossen sind, dadurch gekennzeichnet, daß unter Ausschluß jeglicher Wirkung auf die thermodynamische Maschine während der Heiz- bzw. Erwärmungsphase die Leitungen (11) geschlossen werden, durch welche der Hilfskessel (10) mit der Versorgungsleitung (8) des Netzes der Austauscher (9) verbunden ist, und der Rücklauf dieser Leitung zur dem Austausch-Sammel-Behälter freigegeben wird, sobald die Temperatur der wärmeableitenden Flüssigkeit (4) in dem Austausch-Sammel-Behälter (5) eine Schwelle von beispielsweise vierzig Grad erreicht, und daß umgekehrt der Rücklauf (7) zu dem Austausch-Sammel-Behälter (5) der Versorgungsleitung (8) des Netzes der Austauscher (9) unterbunden und der Hilfskessel (10), dessen abführende Leitung (11) und rückführende Leitung (12) an die Versorgungsleitung (8) der Austauscher (9) angeschlossen werden, in Betrieb gesetzt wird, sobald die Temperatur der wärmeableitenden Flüssigkeit in dem Austausch-Sammel-Behälter (5) unter eine bestimmte Schwelle von zum Beispiel vierzig Grad absinkt.

2. Verfahren nach Anspruch 1, zur Anwendung auf eine Vorrichtung, die ferner einen Ballon (29) aufweist, der zum Zweck der Erwärmung des Sanitärwassers (33) in den Behälter (14) des Hilfskessels (10) eintaucht, dadurch gekennzeichnet, daß außerhalb der Heizphasen und während des alleinigen Bedarfs an sanitärem Warmwasser jegliche Zirkulation wärmeabgebender Flüssigkeit in der Leitung (8), durch welche die Austauscher versorgt wurden, unterbunden und ein Kommunikation (21, 22) zwischen dem Behälter (14) des Hilfskessels (10) und dem Austausch-Sammel-Behälter (5) hergestellt wird, so daß das Wasser des Austausch-Sammel-Behälters durch Wärmesaugwirkung in dem Behälter (14) des Hilfskessels zirkuliert und der Ballon (29) des Sanitärwassers (33) erwärmt wird.

3. Vorrichtung für die Zentralheizung einer Anlage, die mit zumindest einer thermodynamischen Maschine (2), zum Beispiel einer Wärmepumpe oder einer Kältemaschine ausgestattet ist, die zumindest einen Austausch-Sammel-Behälter (5) für die Rückgewinnung der zumindest in einer Leitung (3) durch Kondensation eines Kältemittels freiwerdenden Wärme aufweist, wobei der Behälter durch eine abführende Leitung (6) und rückführende Leitung (7) mit einer Versorgungsleitung (8) eines Netzes von Austauschern (9), beispielsweise Heizkörpern, verbunden ist, einen Hilfskessel (10), mit dessen Behälter (14) abführende Leitungen (11) und rückführende Leitungen (12) verbunden sind, die an die Versorgungsleitung (8) des Netzes der Austauscher (9) angeschlossen sind, zumindest ein Element (15) zur Steuerung des Heizkessels (10) und Elemente (27) zur Regelung der Wassertemperatur in dem Austausch-Sammel-Behälter (5), dadurch gekennzeichnet, daß einerseits Steuerventile (36 und 37) zur Steuerung des Anschlusses der abführenden Leitungen (11) und rückführenden Leitungen (12) des Hilfskessels (10) in der Versorgungsleitung (8) der Austauscher (9) und ein zwischen dem Rücklauf (7) zu dem Austausch-Sammel-Behälter (5) und der Versorgungsleitung (8) der Austauscher (9) eingeschaltetes Absperrsteuerelement (38) vorgesehen sind und daß andererseits in dem Austausch-Sammel-Behälter (5) der Aquastat (27) sowohl mit der Steuerung des Heizkessels als auch jener der Steuerventile (36 und 37) und des Absperrelements (38) verbunden ist.

4. Vorrichtung nach Anspruch 3, die ferner einen Ballon (29) aufweist, der zum Zweck der Erwärmung des Sanitärwassers (33) in den Behälter (14) des Hilfskessels eintaucht, und die Pumpe (13), durch welche die Zirkulation der wärmeableitenden Flüssigkeit in der Versorgungsleitung (8) des Netzes der Austauscher (9) gesteuert wird, dadurch gekennzeichnet, daß der Behälter (14) des Hilfskessels (10) über mindestens eine durch die Ventile (23, 24) gesteuerte Leitung (21, 22) mit dem Austausch-Sammel-Behälter (5) verbunden ist und daß einerseits der Aquastat ebenfalls mit der Steuerung der Pumpe (13) verbunden ist und andererseits die Vorrichtung insbesondere in der Versorgungsleitung (8) des Austauschernetzes eine Klappe bzw. Ein Klappenventil (40) aufweist, das die Wasserzirkulation durch einfache Wärmesaugwirkung unterbindet und ermöglicht, daß durch den Betrieb oder Stillstand der Pumpe (13) die Zirkulation oder Nichtzirkulation der wärmeabgebenden Flüssigkeit sichergestellt werden kann.